**Europäisches Patentamt**

**European Patent Office**

**Office européen des brevets**

(19)

(11) Veröffentlichungsnummer: **0 067 362**

**B1**

(12) **EUROPÄISCHE PATENTSCHRIFT**

(45) Veröffentlichungstag der Patentschrift:
13.08.86

(51) Int. Cl.⁴: **C 08 F 8/12**

(21) Anmeldenummer: **82104806.3**

(22) Anmeldetag: **02.06.82**

(54) Verbessertes Verfahren zur alkalischen Verseifung von PAN.

(30) Priorität: **12.06.81 DE 3123290**

(43) Veröffentlichungstag der Anmeldung:
**22.12.82 Patentblatt 82/51**

(45) Bekanntmachung des Hinweises auf die Patenterteilung:
**13.08.86 Patentblatt 86/33**

(84) Benannte Vertragsstaaten:
**AT BE CH DE FR GB IT LI NL**

(56) Entgegenhaltungen:
**EP-A-0 019 681**
**US-A-2 812 317**
**US-A-3 419 502**

**Die Akte enthält technische Angaben, die nach
dem Eingang der Anmeldung eingereicht wurden
und die nicht in dieser Patentschrift enthalten sind.**

(73) Patentinhaber: **CASSELLA Aktiengesellschaft,
Hanauer Landstrasse 526, D-6000 Frankfurt am
Main 61 (DE)**

(72) Erfinder: **Wille, Herbert, Dr., Hünfelder Strasse 16,
D-6000 Frankfurt am Main 61 (DE)**
Erfinder: **Engelhardt, Friedrich, Dr., Hünfelder
Strasse 20, D-6000 Frankfurt am Main 61 (DE)**

(74) Vertreter: **Urbach, Hans-Georg, Dr., Hanauer
Landstrasse 526, D-6000 Frankfurt am Main 61 (DE)**

EP 0 067 362 B1

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft ein verbessertes Verfahren zur alkalischen Verseifung von Acrylnitril - Polymerisaten und -Copolymerisaten duch Behandeln von wäßrigen Dispersionen der Polymerisate und Copolymerisaten mit wäßrigen Alkalien bei erhöhter Temperatur, dessen wesentlichstes Merkmal darin besteht, daß Hydrolyse zweistufig durchgeführt wird und daß eine erhebliche Verbesserung der Produktqualität und eine erhöhte Raum-Zeit-Ansbeute ermöglicht.

Es ist bekannt, Polyacrylnitril bzw. polyacrylnitrilhaltige Mischpolymerisate in wäßriger Suspension bei höherer Temperatur unter Abspaltung von Ammoniak ganz oder teilweise zu verseifen. Es ist weiterhin bekannt, daß diese Verseifung im wäßrigen Medium drucklos erfolgen kann, wenn man Lösungen von Alkalihydroxyden zu PAN-Suspensionen bei Temperaturen von ca. 100°C zugibt.

Diese Arbeitsweise hat verschiedene, bekannte Nachteile. So läuft die Reaktion über eine sehr viskose Zwischenphase, die bei konzentrierterem Arbeiten hohe Anforderungen an die Rührwerke stellt.

Die Ammoniakentwicklung sowie die Wasserdampfbildung führt zu einem Aufblähen des sehr viskosen Ansatzes, so daß die Gefahr des Überschäumens gegeben ist. Die Apparategrößen sind daher nicht voll nutzbar.

Der entstehende Ammoniak entweicht aus den viskosen Lösungen nur unvollständig und muß unter Umstämden durch Einblasen von Dampf bzw. Luft ausgetrieben werden. Die erhaltenen klaren viskosen Produkte enthalten größere Mengen gelartiger Teilchen. Diese mit bloßem Auge usichtbaren Gelteilchen stören bei vielen Anwendungszwecken (z. B. als Dispergiermittel oder Färbereihilfsmittel).

Durch zeitraubende Filtrationen über Tiefenfilter bzw. durch den Einsatz teurer Zentrifugalmaschinen müssen diese Gelteilchen entfernt werden (s. Vergleichsbeispiel 2). Diese erforderliche Trennoperation ist besonders bei konzentrierten und somit sehr hochviskosen Produkten problematisch und zudem immer mit Produktverlusten verbunden. Im Labor, d.h. beim Arbeiten in Glasgefäßen wurde festgestellt, daß der Anteil an Gelteilchen praktisch auf 0 zurückgeht, wenn die PAN-Suspension gleichmäßig der Alkalilauge zugegeben wird und insbesondere dann, wenn die Zugabe unter die Oberfläche der Alkalilauge erfolgt. Diese Arbeitsweise bietet den weiteren Vorteil, daß die hochviskose Zwischenphase nicht auftritt, das Schaumproblem entfällt und der entstehende Ammoniak weitgehend als Ammoniakwasser abdestilliert werden kann.

Die technische Durchführung dieser Arbeitsweise in Edelstahl - Apparaturen ergibt jedoch trübe viskose Produkte, die allerdings keine Gelteilchen enthalten. Beim Stehen bzw. durch Zentrifugieren trennen sie sich in 2 Phasen, von denen die untere Phase nicht mehr wasserverdünnbar ist. Diese Produkteigenschaft erlaubte es daher nicht, generell nach dieser Arbeitsweise zu verfahren (Vergleichsbeispiele 3 u. 4).

Eine ähnliche Arbeitsweise wird auch in der US-Patentschrift Nr. 3,419,502 beschrieben. Hier wird eine Polyacrylnitrilsuspension im Verlauf von 50—90 Minuten bei 90°C in 50%ige wäßrige Natronlauge einlaufen gelassen. Anschließend wird noch 2,5 bis 5 Stunden bei 90—100°C nachgerührt.

Diese Arbeitsweise führt jedoch ebenfalls nur dann zu einwandfreien klaren Produkten, wenn in Glas- oder Emailapparaturen gearbeitet wird.

Der Einsatz von Glasapparatueren in Dimensionen, wie sie für die Herstellung von Massenprodukten erforderlich sind, ist in der Praxis ausgeschlossen. Die Verwendung von Emaillekesseln scheidet ebenfalls aus, da die Hydrolyse in Gegenwart starken Alkalis verläuft und Emaillekessel unter diesen Bedingungen einem hohen Verschleiß unterworfen sind.

Es wurde nun gefunden, daß völlig klare und unbegrenzt wasserverdünnbare Produkte praktisch ohne Gelanteile auch bei der Benutzung von Edelstahlkesseln dann erhalten werden, wenn man bei der Herstellung von homogenen wäßrigen Lösungen verseifter oder teilverseifter Acrylnitril - Polymerisate und -Copolymerisate durch Behandeln von wäßrigen Dispersionen der (Co)-polymerisate mit wäßrigen Alkalien bei erhöhter Temperatur zweistufig arbeitet, indem man die Dispersion unter ständigem Rühren einer auf 70 bis 85°C erwärmten wäßrigen Alkalihydroxyd-Lösung zusetzt und nach erfolgter Zugabe die Mischung unter Rühren auf eine Temperatur von über 91° bis 110°C erwärmt, bis die berechnete Menge Ammoniak abgespalten ist.

Vorzugsweise erfolgt die Zugabe der Dispersion des Acrylnitrilpolymerisats oder -copolymersats zur Alklihydroxydlösung bei 80 bis 85°C, und anschließend wird die Mischung auf eine Temperatur oberhalb 91 bis 93°C, insbesondere auf 100 bis 105°C erwärmt.

Es ist nicht erforderlich, die Menge, des Alkalihydroxyds genau der Menge der zu hydrolysierenden Nitrilgruppen anzupassen. Es genügt durchaus, 0,5 Mol Alkalihydroxyd pro Mol zu verseifender Nitrilgruppen einzusetzen, und die Menge kann im Interesse eines raschen Reaktionsverlaufs ohne Nachteile bis auf 1,5 erhöht werden. Vorzugsweise werden 0,6 bis 0,75 Mol Alkalihydroxyd pro Mol zu verseifender Nitrilgruppen eingesetzt.

Das Alkalihydroxid wird in Form einer 10 bis 50 gew.%iger, vorzugsweise 20 bis 40 gew.%iger wässrigen Lösung eingesetzt. Die Verwendung niedriger oder höher konzentrierter Alkalihydroxyd - Lösungen ist zwar möglich aber unökonomischer und daher nicht empfohlen.

Eine besonders empfehlenswerte Ausführungsform des erfindungsgemäßen Verfahrens besteht darin, daß man die Dispersion unter die Oberfläche der vergelegten Alkalihydroxyd - Lösung eingließen läßt.

Ferner ist es möglich und auch besonders zwechmäßig, den bei der Verseifung entstehenden Ammoniak aus dem Ansatzgemisch als ca. 15- bis 25%iges Ammoniakwasser abzudestillieren.

Bei der Herstellung von teilverseiften Produkten wird so viel NH$_3$ abdestilliert, wie nach dem gewünschten Verseifungsgrad zu erwarten ist und dann die Reaktion durch Abkühlen unterbrochen.

Bei der erfindungsgemäßen Arbeitsweise wird die Bildung der sonst üblichen hochviskosen Zwischenphase des Reaktionsansatzes vermieden, das heftige und lästige Schäumen entfällt, so daß die Apparaturen erheblich stärker befüllt und somit besser ausgenutzt werden können, und die Reaktion kann schneller ausgeführt und admit in kürzerer Zeit beendet werden.

Die erhalten Produkte sind klar in Wasser löslich, frei von Gelpartikeln und trennen sich auch bei längerer Lagerung nicht in zwei Phasen.

Das folgende Ausfürungsbeispiel veranschaulicht die vorliegende Erfindung und zeigt durch Gegenüberstellung mit Vergleichsbeispielen den überraschenden Effekt der im erfindungsgemäßen Verfahren vorliegenden vorteilhaften Kombination von Einzelmaßnahmen.

Beispiel 1

In einem 5000 l fassenden kühlbaren Rührwerksbehälter aus V4A-Stahl, ausgestattet mit Destillationseinrichtung, werden 300 kg Ätznatronlauge in 650 l Wasser gelöst. Die Temperatur steigt hierbei auf ca. 100°C an. Diese Natronlauge wird auf 80°C abgekühlt und aus einem Rührbehälter 3100 kg einer ca. 16%igen PAN-Suspension von 80°C in 5 bis 6 Stunden unter die Oberfläche der Natronlauge zudosiert. Die Temperatur wird durch Außenkühlung bei 80 bis 85°C gehalten. Nach beendeter Zugabe der PAN-Suspension wird noch 1 Stunde bei 80 bis 85°C gerührt. Anschließend wird in ca. 3 Stunden auf 100°C angeheizt, wobei ca. 600 bis 800 l Wasser, die ca. 120 kg Ammoniak enthalten, abdestillieren. Nach einer weiteren Stunde ist der Ansatz völlig klar und nur noch leicht gelblich gefärbt.

Nach der Neutralisation mit verdünnter Schwefelsäure ist das Produkt verwendungsfähig; es ist vollständig frei von Gelpartikeln und scheidet auch nach längerer Lagerung keine wasserunlöslichen Bestandteile aus.

Vergleichsbeispiel 2

(Bislang praktizierter Stand der Technik, PAN-Suspension vorgelegt, NaOH zulaufen lassen, einstufige Temperaturführung).

Eine Suspension von 250 kg Polyacrylnitril in 2000 l Wasser wird auf 92°C angeheizt. Innerhalb von 3 Stunden werden 600 l Natronlauge 27%ig zugegeben. Die Temperature wird hierbei durch Außenkühlung bei 98 bis 100°C gehalten.

Es entsteht eine rot gefärbte hochviskose, aufgeblähte Masse, die eine sehr hohe Antriebsleistung des Rührwerks erfordert und die das gesamte Kesselvolumen ausfüllt. Ein Teil des hierbei entstehenden Ammoniaks entweicht und wird in Wasser absorbiert. Man rührt bei 98 bis 100°C bis der Ansatz als klare Lösung vorliegt, was nach ca. 1 Std. der Fall ist. Dann wird bei 95 bis 100°C 5 Stunden Dampf über ein Blasrohr eingeleitet, bis der Abgasstrom nicht mehr alkalisch reagiert. Das im Abgasstrom enthaltene NH$_3$ wird in einem Schwefelsäurewäscher absorbiert.

Die klare hochviskose Lösung wird mit Schwefelsäure neutralisiert. Sie enthält jedoch Anteile quallenartiger Gelpartikel und wird deshalb unter geringem Überdruck durch Filzplatten filtriert. Die Filtrierzeit beträgt 10 bis 15 Stunden. Man erhält so ein klares brauchbares Produkt.

Vergleichsbeispiel 3

(NaOH vorgelegt, PAN-Dispersion zulaufen lassen, einstufige Temperaturführung).

In einem 5 m$^3$ Edelstahlkessel werden 900 l 26%ige Natronlauge vorgelegt und auf 95 bis 100°C angeheizt. Aus einem weiteren Rührwerksbehälter wird eine Suspension von 500 kg Polyacrylnitril in 2800 l Wasser auf 100°C erhitzt und innerhalb von 1 bis 1,5 Stunden zu der Natronlauge zugegeben.

Die Temperatur steigt ohne Heizung auf ca. 103°C an. Es wird noch 2 Stunden bei 105°C gerührt. Auschließend wird noch 4 Stunden Luft durch ein Tauchrohr eingeblasen, die Abluft wird durch einen Schwefelsäurewäscher geleitet. Das trübe, hochviskose Reaktionsprodukt wird mit Schwefelsäure neutralisiert. Es enthält quallenartige Gelpartikel und wird daher unter geringem Überdruch über Filzplatten filtriert. Die Flitration dauert ca. 24 Stunden und liefert ein von groben Gelpartikeln freies, jedoch noch immer trübes Filtrat, das nach einigem Stehen eine wasserunlösliche Phase ausscheidet und daher für viele Einsatzzwecke ungeeignet ist.

Vergleichsbeispiel 4

(Wie Vergleichsbispiel 3, jedoch wird die PAN-Suspension unter die Oberflächer der Natronlauge geleitet).

In einem 5 m$^3$ fassenden Edelstahlkessel mit Kühler werden 900 l Natronlauge 27%ig vorgelegt und auf 95 bis 100°C angeheizt. In einem Nachbarkessel wird eine Suspension von Polyacrylnitril in 3200 l Wasser, auf 100°C erhitzt. Diese Suspension wird in ca. 5 bis 6 Stunden durch ein Tauchrohr unter die Oberfläche dosiert. Das abdestillierende Ammoniakwasser wird in einer Vorlage gesammelt. Die Temperatur im Reaktionskessel erreicht ohne Heizung ca. 105°C.

Nach beendeter Reaktion wird die Polymerisatlösung mit verdünnter Schwefelsäure neutralisiert.

Die trübe viskose Lösung enthält nur wenig Gelanteile, die durch Filtration über ein Kerzenfilter entfernt werden müssen. Wie im Vergleichsbeispiel 3 wird auch hier ein trübes Filtrat erhalten, das nach längeren Stehen ein sehr feinteiliges wasserlösliches Sediment abscheidet, das auch durch wiederholtes Filtrieren nicht entfernt werden kann. Das Produkt ist daher ebenfalls nur beschränkt einstazfähig.

**Patentansprüche**

1. Verfahren zur Herstellung von homogenen wäßrigen Lösungen verseifter oder teilverseifter Acrylnitril - Polymerisate und -Copolymerisate durch Behandeln von wäßrigen Dispersionen der Polymerisate bzw. Copolymerisate mit wäßrigen Alkalien bei erhöhter Temperatur, dadurch gekennzecihnet, daß die Dispersion unter ständigem Rühren einer auf 70 bis 85°C erwärmten wäßrigen Alkalihydroxyd-Lösung zugesetzt und nach erfolgter Zugabe die Mischung unter Rühren auf eine Temperatur von über 91 bis 110°C erwärmt wird, bis die berechnete Menge Ammoniak abgespalten ist.

2. Verfahren gemäß Anspruch 1, dadurch gekennzeichnet, daß die Zugable der Dispersion zu einer auf 80 bis 85°C erwärmten Alkalihydroxyd - Lösung erfolgt und anschließend auf 100 bis 105°C erwärmt wird.

3. Verfahren gemäß den Ansprüchen 1 und 2, dadurch gekennzeichnet, daß man 0,5 bis 1,5 Mol, bevorzugt 0,6 bis 0,75 Mol, Alkalihydroxyd - Lösung pro Mol zu verseifender Nitrilgruppen einsetzt.

4. Verfahren gemäß den Ansprüchen 1 bis 3, dadurch gekennzeichnet, daß man die Dispersion unter die Oberfläche der vorgelegten Alkalihydroxyd - Lösung einfließen läßt.

5. Verfahren gemäß den Ansprüchen 1 bis 4, dadurch gekennzeichnet, daß man das bei der Verseifung· entstehende Ammoniak aus dem Ansatzgemisch als ca. 15- bis 25%iges Ammoniakwasser abdestilliert.

**Revendications**

1. Procédé pour préparer des solutions aqueuses homogènes de polymers et copolymers d'acrylnitrile saponifiés ou partielement saponifiés par traitement des dispersions aqueuses des polymers ou copolymers avec des métaux alcalins aqueux à température elevée, caractérisé en ce qu'on ajoute la dispersion sous agitation constante à une solution aqueuse d'hydroxyde alcalin chauffée à 70 à 85°C et on chauffe après l'addition le mélange sous agitation à une température de plus de 91 à 110°C jusqu'à ce que la quantité calculée d'ammoniac soit enlevée.

2. Procédé selon la revendication 1, caractérisé en ce que l'addition de la dispersion se fait à une solution d'hydroxyde alcalin chauffée à 80 à 85°C avec chauffage ultérieur à 100 à 105°C.

3. Procédé selon l'une des revendications 1 et 2, caractérisé en ce qu'on utilise 0,5 à 1,5 moles, de préférence 0,6 à 0,75 moles, de solution d'hydroxyde alcalin par mole de groupes nitrile à saponifier.

4. Procédé selon l'une quelconque des revendications 1 à 3, caractérisé en ce qu'on laisse couler la dispersion sous la surface de la solution d'hydroxyde alcalin initialement placée.

5. Procédé selon l'une quelconque des revendications 1 à 4, caractérisé en ce qu'on chasse par distillation l'ammoniac formé lors de la saponification du mélange réactionnel comme eau ammoniacale à 15 à 25% environ.

**Claims**

1. Process for the preparation of homogeneous aqueous solutions of saponified or partially saponified acrylonitrile polymers and copolymers by treating aqueous dispersions of the polymers or copolymers, respectively, with aqueous alkalis at elevated temperature, characterised in that the dispersion is added with continuous stirring to an aqueous alkali metal hydroxide solution which has been heated to 70 to 85°C, and, after the addition is complete, the mixture is heated to a temperature of over 91 to 110°C, while stirring, until the calculated amount of ammonia has been split off.

2. Process according to Claim 1, characterised in that the dispersion is added to an alkali metal hydroxide solution which has been heated to 80 to 85°C and which is then heated to a temperature of 100 to 105°C.

3. Process according to Claims 1 and 2, characterised in that 0.5 to 1.5 mols, preferably 0.6 to 0.75 mol, of alkali metal hydroxide solution are employed per mol of nitrile groups to be saponified.

4. Process according to Claims 1 to 3, characterised in that the dispersion is allowed to flow under the surface of the initially taken alkali metal hydroxide solution.

5. Process according to Claims 1 to 4, characterised in that the ammonia formed in the saponification is distilled off from the mixture in the form of approx. 15 to 25% strength aqueous ammonia.